# EUROPÄISCHE PATENTSCHRIFT

(11) **EP 1 353 738 B1**
(45) Veröffentlichungstag und Bekanntmachung des Hinweises auf die Patenterteilung: **23.05.2007**
(21) Anmeldenummer: 02711806.6
(22) Anmeldetag: 18.01.2002
(51) Int. Cl.: B01D 19/04, C11D 3/32, C11D 3/00

(54) **HARNSTOFFHALTIGE ZUSAMMENSETZUNGEN, VERFAHREN ZU IHRER HERSTELLUNG UND DEREN VERWENDUNG**
COMPOSITIONS CONTAINING UREA, METHOD FOR PRODUCTION AND USE THEREOF
COMPOSITIONS A BASE D'UREE, PROCEDE PERMETTANT DE LES PREPARER ET LEUR UTILISATION

(30) Priorität: 18.01.2001 DE 10102274
(43) Veröffentlichungstag der Anmeldung: 22.10.2003
(73) Patentinhaber: GE Bayer Silicones GmbH & Co. KG, 51368 Leverkusen (DE)
(72) Erfinder: LANGE, Horst, 44879 Bochum (DE); ROOS, Christopher, 51065 Köln (DE); KROPFGANS, Martin, 51519 Odenthal (DE)
(86) Internationale Anmeldenummer: PCT/EP2002/000457
(87) Internationale Veröffentlichungsnummer: WO 2002/056993

(56) Entgegenhaltungen:
- WO-A-95/18212
- US-A- 4 289 525
- US-A- 4 624 713
- US-A- 6 028 113

## Beschreibung

Die Erfindung betrifft harnstoffhaltige Zusammensetzungen, ein Verfahren zu ihrer Herstellung, deren Verwendung sowie aus den Zusammensetzungen hergestellte Erzeugnisse.

Eine Vielzahl von Erzeugnissen benötigt zu ihrer Formulierung feste Zusätze wirksamer Bestandteile. Es kann sich bei solchen wirksamen Bestandteilen einerseits um flüssige Bestandteile handeln, die in eine feste Form überführt werden müssen oder generell um feste oder flüssige Bestandteile, die in eine feste Form gebracht werden müssen, die homogen in der gewünschten Formulierung verteilt werden müssen.

Bestimmte Zusätze, wie z.B. Silicone sind oftmals flüssig. Diese Eigenschaft erschwert ihre Einbindung in pulverförmige Substanzen, da Siliconanreicherungen auf der Oberfläche der einzelnen Pulverpartikel zur Verklebung derselben und damit zur Verminderung der Fließeigenschaften bis zum Zusammenbacken führen können. Silicone sind aufgrund ihrer niedrigen Oberflächenspannung geeignete Stoffe für eine Vielzahl von Modifikationsmittel bei der Herstellung von beispielsweise Waschmitteln, Textilhilfsmitteln, Kosmetika, Papierherstellungshilfsmittel etc. Oft ist eine pulverförmige Formulierung von Siliconkomponenten notwendig, z. B. in Waschmitteln als Additive zur Textilpflege (Weichmacher, Antiknittereffekte) oder als Entschäumer.

Die GB 2178444A beschreibt die Einarbeitung eines Siliconentschäumers in geschmolzenes Polyethylenoxid (8000 g/mol) mit einem geringen Anteil an Palmitinsäure. Aufgrund der wachsartigen Form des Polyethylenoxides kommt es hier besonders bei höheren Aktivgehalten unter Druck zu Verbackungen.

Die EP-A-0771864 beschreibt eine schaumunterdrückende Komponente, hergestellt über eine Vormischung aus anionischem Tensid, entschäumender Verbindung sowie einem strukturbildenden Agens aus der Gruppe der Phosphon- und Diphosphonsäure, Carboxyl- und Polycarboxylsäure, Bernsteinsäure- und Dibernsteinsäure, und Salzen und Mischungen daraus, die auf Natriumaluminosilikate aufgebracht werden. Das Aufbringen auf saugfähige Substanzen birgt das Risko nicht die gesamte Aktivkomponente wieder freisetzen zu können, da diese aufgrund der oben geschilderten Genzflächenaktivität zum Teil auf dem absorbierenden Material verbleibt. Desweiteren sind die Natriumalumosilikate in Wasser unlöslich und können als Rückstände Verfärbungen, zum Beispiel im Waschprozeß auf schwarzen Textilien, verursachen. Ersteres ist eine Verschwendung von Rohstoffen und damit ein Kostenfaktor und steht dem Trend der Kompaktierung entgegen, letzeres führt zu erhöhtem Rückstand und verminderter Aktivität aufgrund von in den Poren gefangenem Produkt.

Die EP-A-0997180 beschreibt die Verwendung von Zeolithen als Träger für Silikonentschäumerformulierungen. Bei der Verwendung von Zeolithen als Träger bestehen jedoch Begrenzungen hinsichtlich der Löslichkeit, Gehalt des wirksamen Bestandteil. Außerdem beobachtet man allgemein Verschleißerscheinungen an Oberflächen von Waschmaschinenteilen und. Textilien durch die Reibung der mineralischen Pulvern, mit denen sie in Kontakt kommen, aufgrund ihrer Unlöslichkeit und Härte.

Die DD 248600 beschreibt eine entschäumende Formulierung, die über einen Mischprozeß aus Harnstoff, bis zu 3 Gew.% Siliconentschäumer, Pentanatriumtriphosphat und Wasser hergestellt wird. Hierbei bindet die Hydratation des Pentanatriumtriphosphats sämtliches Wasser und führt zur Verfestigung der Zusammensetzung, und die Siliconentschäumer binden an den Harnstoff und das Pentanatriumtriphosphat. Der Harnstoff dient dazu als hydrotrope Substanz Einfluß auf die Lösegeschwindigkeit von Waschmittelbestandteilen zu nehmen. Diese Methode erlaubt jedoch, wahrscheinlich aufgrund des nur oberflächlich gebundenen Siliconentschäumers nur eine geringe prozentuale Beladung des Trägers mit der Wirkkomponente. Außerdem führt der oberflächlich gebundene Siliconentschäumer zum Verkleben der Pulver, wodurch die Fließeigenschaften des Pulvers nachteilig beeinflusst werden. Weiterhin gelten Phosphate, die dem Mittel mit mindestens 28 Gew.-% zugesetzt werden und bei der Herstellung des Siliconentschäumers als Wasserentzugsmittel fungieren, als Waschmittelzusatz heute als unerwünscht.

Keine der im Stand der Technik aufgeführten Vorschläge löst das Problem gleichzeitig eine hohe Beladung (Gehalt des wirksamen Bestandteils), geringe Abriebneigung (Abrasion gegenüber Oberflächen), geringe Zusammenbackung unter Druck und hohe Fließfähigkeit bei gleichzeitig vollständiger Löslichkeit in Wasser und/oder polaren Medien zu garantieren.

Es ist somit Aufgabe der Erfindung eine Zusammensetzung mit einem wirksamen Bestandteil bereitzustellen, die ein möglichst vollständig lösliches Pulver oder Granulat mit guter Fließfähigkeit, geringes Zusammenbackung unter Druck, einen hohen Beladungsgrad und eine geringe Abriebneigung ergibt. Eine weitere Aufgabe der Erfindung besteht in der Bereitstellung eines Herstellungsverfahrenfür die erfindungsgemäße Zusammensetzung, deren Verwendung sowie daraus hergestellte Erzeugnisse.

Die erfindungsgemäße Aufgabe wird überraschend gelöst durch eine Zusammensetzung, enthaltend Harnstoff, mindestens einen wirksamen Bestandteil sowie mindestens ein Verdickungsmittel, das aus Kohlenhydraten ausgewählt ist, erhältlich durch Dispergieren mindestens eines genannten wirksamen Bestandteils in einer Schmelze des Harnstoffes in Gegenwart des genannten Verdickungsmittels.

In einer bevorzugten Ausführungsform der Erfindung handelt es sich bei dem wirksamen Bestandteil um solche, die ausgewählt werden aus der Gruppe, die besteht aus Entschäumern, Entschäumerformulierungen und Oberflächenbehandlungsmitteln.

Der wirksame Bestandteil schließt ein: Faserbehandlungsmittel, Reinigungsmittelzusätze, Kosmetikzusätze und Papierherstellungszusätze.

Faserbehandlungsmittel schließen beispielsweise ein:
Textilausrüstungszusätze beispielsweise zur Knitterfestausrüstung, Textilpflegezusätze, Weichspüler, Antistatika, Schrumpffestmittel, biozide Mittel, etc.

Reinigungsmittelzusätze schließen beispielsweise ein:
Entschäumer, Entschäumerformulierungen, Politurzusätze, die vorstehend genannten Faserbehandlungsmittel, etc.

Kosmetikzusätze schließen beispielsweise ein: Haarpflegezusätze, wie Mittel zur Verbesserung der Kämmmbarkeit und sonstige Haarkonditionierung zum Beispiel des Glanzes, des Volumens, des Griffes etc., oder zur Unterdückung der Schuppenbildung, Antistatika, etc.

Papierherstellungszusätze schließen beispielsweise ein:
Entschäumer, Entschäumerformulierungen, Papierherstellungshilfsmittel, wie Flotationshilfsmittel, etc.

Als wirksamer Bestandteil, wie zum Beispiel Entschäumer, eignen sich bevorzugt Polydialkylsiloxane, bestehend aus linearen und/oder verzweigten Siloxanstrukturen.

Als Entschäumerformulierungen eignen sich bevorzugt Polydialkylsiloxane unter Zugabe von beispielsweise Kieselsäuren, Kieselsäuren mit Hydrophobierungsmitteln sowie Kohlenwasserstoffe (Paraffine), Fettsäuren, Fettalkohole, Fettalkohol-Polyether, etc.

Bei den vorstehend genannten Polydialkylsiloxanen handelt es sich zweckmäßig um lineare oder verzweigte, trimethylsilyl- oder hydroxytermierte Polydimethylsiloxane.

Eine bevorzugte Entschäumerformulierung ist diejenige, die in der noch nicht offengelegten Deutschen Patentanmeldung 10001945.5 beschrieben ist. Dabei handelt es sich um eine Silicon-Entschäumer-Mischung, enthaltend
a) Umsetzungsprodukt, erhältlich durch Umsetzung von:
   a1) 60 bis 99 Gewichtsteilen mindestens eines Polysiloxanes ausgewählt aus zyclischen Diorganosiloxanen (i) (z.B. Octamethylcyclotetrasiloxan, Decamethylcyclopentasiloxan) und /oder
      (ii) α, ω-Triorganosilyl-endgestoppte Poly-diorganosiloxane und/oder
      (iii) α, ω-Polydiorgano-siloxandiolen, 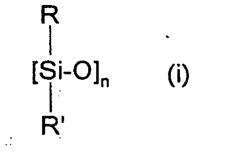 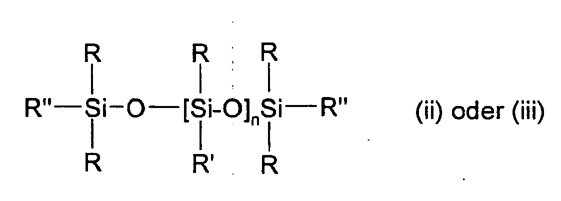
      wobei
      die organischen Gruppen R, R', R" in den Formeln (i) bis (iii) Reste typischer Polyorganosiloxane darstellen, nämlich H, OH oder Alkylreste mit 1 bis 12 Kohlenstoffatomen, wie Methyl-, Ethyl-, Propyl, Cyclohexyl, Cyclohexyl-ethyl, Limonyl, Ethylidennorbornyl oder Arylreste, wie Phenyl-, Methylphenyl-, Ethylphenyl- oder Alkenylreste, wie Vinyl-, Allyl oder Halogenalkylreste, wie 3,3,3-Trifluoropropyl, Hydroxylalkylreste, Chlorpropyl sein können,
   a2) 5-20000 ppm bezogen auf a) eines für die Siloxanpolymerisation geeigneten basischen oder sauren Katalysators, vorzugsweise KOH, CsOH , NR₄OH, RSO₃H oder deren Reaktionsprodukte mit cyclischen, triorganosiloxan- oder hydroxyterminierten Siloxanen oder Mischungen derselben, sowie
   a3) 1 bis 20 Gewichtsteile eines anorganischen Füllstoffes, wie Kieselsäuren (Silica) oder Al- , Ca- bzw. anderer Alkali oder Erdalkalisilikate, Alkali- oder Erdalkalisulfate oder deren Carbonate, andere Pigmente, wie Ruße, Ti02, Bentonite, vorzugsweise feinverteilter, amorpher Kieselsäure, die eine Oberfläche von 50 bis 1000 m²/g, vorzugsweise von 100 bis 300 m²/g (bestimmt nach BET), aufweist,
b) 1 bis 30 Gewichtsteile eines linearen Polydiorganosiloxans mit einer Viskosität von 10 Pa.s bis 50.000 Pa.s bei 23°C bei D= 1 sec^-1 oder eine Mischung aus Polyorganosiloxanen mehrerer Polyorganosiloxane, die diese Viskosität ergeben,
c) 0 bis 20 Gewichtsteile eines MQ-Siliconharzes das sich aus M=R₃Si-O_{1/2} und Q=SiO_{4/2}-Gruppen zusammensetzt,
d) 0,05 bis 10 Gewichtsteile eines Paraffines, eines Fettalkoholes oder einer Fettsäure oder eines Alkylpolyethers mit C₅-C₃₂-Kette,
e) 1 bis 20 Gewichtsteile eines geeigneten Hydrophobierungsagens, wie kurzkettiger hydroxyterminierter Siloxane, Silanole, Alkoxysilane bzw. Siloxane oder Silazane,
vorzugsweise in dem man die Komponenten a1) und a2) mischt und auf 50 bis 300°C erhitzt, nach Erreichen des Equilibierungs-/Polymerisationsgleichgewichtes die Komponente a3) in dem Sinne zugibt, daß der Katalysator a2) neutralisiert und die Umlagerungsreaktion beendet wird und anschließend die restlichen Komponenten b) bis e) zuführt und die Mischung unter Vakuum von verdampfbaren Bestandteilen befreit.

Als Oberflächenbehandlungsmittel, wie zum Beispiel Faserbehandlungsmittel, Reinigungsmittelzusätze, Kosmetikzusätze eignen sich bevorzugt alle organofunktionellen Siloxanstrukturen, d.h. vorzugsweise Polydimethylsiloxane mit zusätzlichen organofunktionellen Gruppen. wie Aryl, Aminoalkyl, Hydroxyalkyl und Oligo-, bzw. Polyhydroxyalkyl, Alkoxy, Halogenalkyl, Esteralkyl, Alkenyl, Alkyloxy, Polyalkylenoxy und/oder alkylenverbrückte Carbobetain-, Sulfobetain-, Aminoxid- oder quarternäre Ammoniumgruppen. Weiterhin eignen sich Copolymere aus Polydimethylsiloxaneinheiten und organischen Monomer- oder Oligomereinheiten, wie polyalkylen- und polyoxyalkylenverbrückte Siloxane mit weiteren organofunktionellen Gruppen, wie quaternären Ammoniumgruppen oder Betaineinheiten. Diese Copolymere schließen beispielsweise α,ω,-diquarternäre Polysiloxane, polyquarternäre Polysiloxan-Copolymere des Typs AB.

Als Papierherstellungszusätze eignen sich die vorstehend genannten Entschäumer- bzw. Entschäumerformulierungen sowie die vorstehend erwähnten Oberflächenbehandlungsmittel.

Die vorstehend genannten Polydialkylsiloxane und Polydialkylsiloxane mit organofunktionellen Gruppen weisen bevorzugt einen Polymerisationsgrad Pₙ von 2 bis 12000, bevorzugt 50 bis 1000 auf.

Der wirksame Bestandteil ist in der erfindungsgemäßen Zusammensetzung bevorzugt in einer Menge von 3 bis 20, bevorzugt 5 bis 15 Gew.-% bezogen auf die Gesamtmenge der erfindungsgemäßen Zusammensetzung enthalten.

Die erfindungsgemäße Zusammensetzung enthält neben dem wirksamen Bestandteil als wesentlichen Bestandteil Harnstoff. Der Harnstoff erfüllt sowohl die Funktion als Träger als auch als Verkapselungsmittel. Im Sinne der Erfindung wird er nicht als wirksamer Bestandteil angesehen und ist von diesem verschieden. Bei der Nutzung eines festen Stoffes als Träger für einen wirksamen Bestandteil ist der Wirkstoffgehalt durch die Größe der Oberfläche des Trägers begrenzt. Die Oberfläche bleibt oft klebrig, was zu verschlechterten Fließeigenschaften der Pulver führt. Bei einer Verkapselung, wie sie in der erfindungsgemäßen Zusammensetzung mit Harnstoff als Träger aufgrund der gegenüber dem Stand der Technik unterschiedlichen Herstellungsweise überwiegend realisiert wird, werden diese Probleme überraschend gelöst. Verwendet man andere Stoffe als Harnstoff als Träger, wie zum Beispiel Oligomere oder Polymere, bei denen nach Aufnahme des wirksamen Bestandteile die äußere Hülle vernetzt wird, zur Verkapselung, kann die Freisetzung verzögert bzw. verhindert werden. Im Falle von hochporösen, oberflächenreichen, unlöslichen Trägermaterialien, wie zum Beispiel Zeolithen oder Kieselsäuren, ist die Freisetzung des wirksamen Bestandteils aus den Poren durch die hohen Adhäsionskräfte verzögert bzw. erschwert. Bei Verwendung von löslichen Fettalkoholen, Polyethern oder sonstigen wasserlöslichen Polymeren sind die erzeugten Pulver leicht kompaktierbar und verlieren ihre Fließeigenschaften.

Der Unterschied zwischen der erfindungsgemäßen Zusammensetzung und beispielsweise einer Zusammensetzung, die durch oberflächliches Auftragen des wirksamen Bestandteils an Harnstoff, zum Beispiel durch Trocknung einer Lösung, ggf. unter Zusatz eines Trocknungsmittels, lässt sich neben den unterschiedlichen Fließeigenschaften sehr gut durch Betrachtung der Pulver unter dem Mikroskop erkennen. Das erfindungsgemäße Pulver weist eingeschlossene Bereiche von Silikonphasen bzw.- tröpfchen auf

In der Zusammensetzung der Erfindung beträgt das Gewichtsverhältnis von Harnstoff zu dem wirksamen Bestandteil bevorzugt von 70 : 30 bis 99,9 : 0,1. Besonders bevorzugt beträgt das Verhältnis 80 : 20 bis 90 :10.

Die erfindungsgemäße Zusammensetzung enthält zusätzlich mindestens ein Verdickungsmittel, das aus Kohlenhydraten ausgewählt wird. Das Verdickungsmittel führt vorteilhaft zur Verdickung der Harnstoffschmelze, wodurch sich der wirksame Bestandteil besser in der Harnstoffschmelze dispergieren läßt. Gleichzeitig wird beobachtet, dass in Gegenwart der Verdickungsmittel eine schnellere Abkühlung und Erstarrung der Schmelze der Zusammensetzung stattfindet. Dies erlaubt eine größere Vielfalt bei der Auswahl der möglichen Granulationsverfahren, die zur Verarbeitung der Schmelze, wie unten dargelegt, angewendet werden können.

Ein besonders bevorzugtes Verdickungsmittel stellt Stärke, insbesondere native Maisstärke dar.

Die erfindungsgemäße Zusammensetzung weist bevorzugt ein Gewichtsverhältnis von (Harnstoff und Verdickungsmittel) zu dem aktiven Bestandteil von 60 : 40 bis 99,9 : 0,1, bevorzugt 80 : 20 bis 90 : 10 auf.

Weiterhin weist die erfindungsgemäße Zusammensetzung bevorzugt eine Menge des Verdickungsmittels bezogen auf die Menge des Harnstoffes von maximal 10 Gew.-% auf.

Bevorzugt setzt sich die erfindungsgemäße Zusammensetzung wie folgt zusammen:
a) 0,1 bis 30 Gew.-% wirksamer Bestandteil, vorzugsweise siliconhaltiger Entschäumer,
b) 54,5 bis 99,4 Gew.-% Harnstoff,
c) 0,5 bis 20 Gew.-% Verdickungsmittel, bevorzugt Stärke,
d) 0 bis 10 Gew.-% Hilfsstoffe, wie zum Beispiel Pigmente, Stabilisatoren, Duftstoffe, etc., wobei die Summe der Gewichtsprozentangaben auf 100 Gew.-% aufaddiert.

Besonders bevorzugt setzt sich die erfindungsgemäße Zusammensetzung wie folgt zusammen:
a) 5 bis 20 Gew.-% wirksamer Bestandteil, vorzugsweise siliconhaltiger Entschäumer,
b) 65 bis 94,25 Gew.-% Harnstoff
c) 0,75 bis 10 Gew.-% Verdickungsmittel, bevorzugt Stärke,
d) 0 bis 5 Gew.-% Hilfsstoffe, wie zum Beispiel Pigmente, Stabilisatoren, Duftstoffe, etc., wobei die Summe der Gewichtsprozentangaben auf 100 Gew.-% aufaddiert.

Die Erfindung betrifft weiterhin ein Verfahren zur Herstellung der erfindungsgemäßen Zusammensetzung, dass die Schritte umfaßt:
a) Schmelzen von Harnstoff,
b) Dispergieren mindestens eines wirksamen Bestandteils in Gegenwart mindestens eines Verdickungsmittels in der Harnstoffschmelze,
c) Abkühlen lassen der Dispersion unter Verfestigung.

Dabei kann zunächst der Harnstoff und das Verdickungsmittel aufgeschmolzen werden und anschließend der wirksame Bestandteil in der Schmelze dispergiert werden. Eine bevorzugte Ausführungsform besteht darin, dass man den Harnstoff aufschmilzt und anschließend das Verdickungsmittel und den aktiven Bestandteil darin gleichzeitig dispergiert.

In die Schmelze oder beim Aufschmelzen kann gegebenenfalls Wasser in einer Menge von maximal etwa 10 Gew.-% bevorzugt maximal etwa 5 Gew.-%, noch bevorzugter maximal etwa 2 Gew.-% bezogen auf die Menge des Harnstoffes zugesetzt werden. Durch den Zusatz von Wasser wird die Schmelztemperatur des Harnstoffes herabgesetzt.

Die Temperatur der Schmelze bei der Herstellung beträgt bevorzugt von 125° bis 175°C, bevorzugt 130°C bis 145°C.

Der Zeitraum der für das Dispergieren vorzugsweise unter Rühren erforderlich ist, kann in Abhängigkeit von den Rührbedingungen von bevorzugt etwa 0,5 bis 15 Minuten betragen.

Nach der Dispergierung, vorzugsweise unter Verwendung eines Rührers, des aktiven Bestandteils in der Schmelze kann man die Schmelze in einem Behälter unter schneller Abkühlung erstarren lassen und den Schmelzkuchen anschließend brechen, z. B. mittels eines Hackwerks, und mahlen.

In einer bevorzugten Ausführungsform wird jedoch die Schmelze unmittelbar einer Granulation oder Prillung unter Abkühlen lassen unterworfen. Bevorzugt wird die Granulation, die beispielsweise einschließen kann: eine Strang-, Teller- oder Sprühgranulation, worunter die Sprühgranulation besonders bevorzugt ist, da sie zu einer raschen Wärmeabfuhr und besonders guten Pulvereigenschaften führt. In der Regel werden bei der Sprühgranulation sogenannte Saatkörner, bei denen es sich um reines Trägermaterial oder ausklassiertes Produkt geeigneter Korngröße handelt, verwendet.

Die erfindungsgemäße Zusammensetzung fällt nach dem vorstehend beschriebenen Herstellungsverfahren in Form eines fließfähigen, festen Pulvers oder Granulats an. Das erhaltene Pulver bzw. Granulat kann gegebenenfalls noch mit Hilfsstoffen, wie zum Beispiel mineralischen Füllstoffen, wie Silikate, Carbonate etc. oder Trennmitteln, z. B. Wachse, Fettsäuren und deren Derivate etc., bepudert werden.

Die erfindungsgemäße Zusammensetzung wird bevorzugt als Reinigungsmittelzusatz, Kosmetikzusatz, Textilausrüstungszusatz, als Zusatz bei der Papierherstellung, bei der Abwasserbehandlung oder bei Färbeprozessen verwendet. Besonders bevorzugt ist die Verwendung als Waschmittelzusatz, beispielsweise in der Form von pulverförmigen oder tablettenförmigen Waschmitteln für Spülmaschinen oder Waschmaschinen.

Vorzugsweise handelt es sich bei den erfindungsgemäßen Zusammensetzungen um schaumdämpfende Mittel (Entschäumer), die detergenzienhaltigen Reinigungsformulierungen zugesetzt werden.

Die Erfindung betrifft schließlich auch Erzeugnisse, die die erfindungsgemäße Zusammensetzung enthalten. Vorzugsweise handelt es sich dabei um Waschmittel, Kosmetika, Oberflächenbehandlungsmittel etc.

### Beispiele:

### Vergleichsbeispiel 1:

In einem heizbaren Becherglas mit KPG-Rührer mit Dispergierscheibe werden 270g Polyethylenglycol einer Molmasse von 8000g/mol bei 80°C aufgeschmolzen und anschließend 30g eines trimethylsilylterminierten Poly(dimethylsiloxan)s (η = 60Pa.s) 15Min. eingearbeitet. Die Mischung wird auf Alufolie erkalten gelassen und in einem Hackwerk vermahlen. Partikel größer 1,6 mm und kleiner 0,425mm werden durch Sieben abgetrennt.

### Vergleichsbeispiel 2:

Zu einer wässrigen Aufschlämmung aus 40 g Wasser, 60 g eines trimethylsilylterminierten Poly(dimethylsiloxan)s (η = 60Pa.s) und 620 g Harnstoff, werden 280 g Pentanatriumtriphosphat unter intensivem Rühren hinzugegeben. Das Produkt fällt als überwiegend verklebtes Kristallisat in Form von Harnstoff- und Phosphatkristallen unterschiedlicher Größe an, an die das Siloxan fixiert ist. Durch Siebung konnten Partikel größer 1,6 mm und kleiner 0,425mm abgetrennt werden, die im Fließtest jedoch ähnlich wie bei Vergleichsbeispiel 1 keine ausreichenden Fließeigenschaften zeigten.

### Beispiel 1:

In einem heizbaren Becherglas mit KPG-Rührer mit Dispergierscheibe werden 262,5g Harnstoff bei 145°C aufgeschmolzen und anschließend 7,5g native Maisstärke zugegeben und eingerührt. Daraufhin werden 30g eines trimethylsilylterminierten Poly(dimethylsiloxan)s (η = 60Pa.s) 10Min. eingearbeitet. Die Mischung wird auf Alufolie erkalten gelassen und in einem Hackwerk vermahlen. Partikel größer 1,6 mm und kleiner 0,425mm werden durch Sieben abgetrennt.

### Beispiel 2:

In einem heizbaren Becherglas mit KPG-Rührer mit Dispergierscheibe werden 255g Harnstoff bei 145°C aufgeschmolzen und anschließend 15g native Maisstärke zugegeben und eingerührt. Daraufhin werden 30g eines trimethylsilylterminierten Poly(dimethylsiloxan)s (η = 60Pa.s) 10Min. eingearbeitet. Die Mischung wird auf Alufolie erkalten gelassen und in einem Hackwerk vermahlen. Partikel größer 1,6 mm und kleiner 0,425mm werden durch Sieben abgetrennt.

### Beispiel 3:

In einem heizbaren Becherglas mit KPG-Rührer mit Dispergierscheibe werden 247,5g Harnstoff bei 145°C aufgeschmolzen und anschließend 22,5g native Maisstärke zugegeben und eingerührt. Daraufhin werden 30g eines trimethylsilylterminierten Poly(dimethylsiloxan)s (η = 60Pas) 10Min. eingearbeitet. Die Mischung wird auf Alufolie erkalten gelassen und in einem Hackwerk vermahlen. Partikel größer 1,6 mm und kleiner 0,425mm werden durch Sieben abgetrennt.

### Beispiel 4:

In einem heizbaren Becherglas mit KPG-Rührer mit Dispergierscheibe werden 270g Harnstoff bei 145°C aufgeschmolzen und anschließend 15g native Maisstärke zugegeben und eingerührt. Anschließend 15g trimethylsilylterminiertes Poly(dimethylsiloxan) (η = 60Pa.s) 10Min. eingearbeitet. Die Mischung wird auf Alufolie erkalten gelassen und in einem Hackwerk vermahlen. Partikel größer 1,6 mm und kleiner 0,425mm werden durch Sieben abgetrennt.

### Beispiel 5:

In einem heizbaren Becherglas mit KPG-Rührer mit Dispergierscheibe werden 217,5g Harnstoff bei 145°C aufgeschmolzen und anschließend 22,5g native Maisstärke zugegeben und eingerührt. Anschließend 60g trimethylsilylterminiertes Poly(dimethylsiloxan) (η = 60Pa.s) 10Min. eingearbeitet. Die Mischung wird auf Alufolie erkalten gelassen und in einem Hackwerk vermahlen. Partikel größer 1,6 mm und kleiner 0,425mm werden durch Sieben abgetrennt.

### Beispiel 6:

Ein Granulat statistisch bestehend aus 10% Silicon, 3,5% Stärke und 86,5% Harnstoff hergestellt durch Granulierung einer Schmelze bestehend aus 6,7% Stärke, 13,3% und 80% Harnstoff auf ein Flußbett aus kristallinem Harnstoff in einer Wirbelschichtgranulationsanlage AGT 400 der Glatt GmbH. In einem separaten Schmelzkessel wurden Harnstoff aufgeschmolzen, mit Stärke verdickt und das Siliconöl zugegeben und in der Schmelze bei 145°C dispergiert. In einem Sprühgranulator der Firma Glatt AG des Typs AGT 400 wurde die Schmelze auf eine Saat, bestehend aus Harnstoff oder aus vorausgegangener Produktion mit Korngrößen von 500 bis 1400 µm aufgesprüht. Die Sprühschicht wurde dabei mittels Luftzufuhr auf einer Temperatur bei 60 bis 65°C gehalten. Der Durchsatz betrug 40 kg pro Stunde. Es wurde durch Sichtung im Fließbett ein Granulat mit einem mittleren Durchmesser von etwa 1500 µm abgetrennt. Der Überstand wurde gebrochen und zurückgeführt.

### Beispiel 7:

Ein Granulat bestehend aus 15% Silicon, 5% Stärke 85% Harnstoff wurde wie in Beipiel 6 beschrieben hergestellt durch Granulierung einer Schmelze bestehend aus 15% Silicon, 5% Stärke 85% Harnstoff.

### Messung der Fließeigenschaften:

Zur Messung wird ein trockenes Glasrohr mit einem Innendurchmesser von 3,6 cm und einer Höhe von 60 cm, das sich auf den letzten 2,5 cm auf einen Innendurchmesser von 2,3 cm verjüngt, verwendet, auf dem Markierungen auf 15 cm, 40 cm und 50 cm Höhe - von unten her gemessen - angebracht sind. Dieses wird unten mittels eines Schiebers verschlossen und auf 50 cm Höhe mit Pulver/Granulat befüllt. Nun wird der Schieber entfernt und die Zeit gemessen, die der Pulverspiegel braucht um die Strecke von der 40 cm bis zur 15 cm Marke zu passieren. Es wurden jeweils 3 Versuche mit den in den oben beschriebenen Beispielen erhaltenen Pulvern durchgeführt. Die Ergebnisse sind in Tabelle 1 gezeigt.

**Tabelle 1:**

| **Beispiel** | **Silicon-gehalt** | **Fließzeit [Sek.]** | | | | **Kommentar** |
|---|---|---|---|---|---|---|
| | **Gew.-%** | **1.** | **2.** | **3.** | **Mittel** | |
| Vergleichsbeispiel | 10 | - | - | - | - | Fließt nicht |
| 1 (Mahlgut) | | | | | | |
| Vergleichsbeispiel | 6 | - | - | - | - | Fließt nicht |
| 2 (Kristallisat) | | | | | | |
| Beispiel 1 (Mahlgut) | 10 | 6,0 | 6,1 | 6,3 | 6,1 | Fließt |
| Beispiel 2 (Mahlgut) | 10 | 4,6 | 4,5 | 4,5 | 4,5 | Fließt |
| Beispiel 3 (Mahlgut) | 10 | 6,5 | 6,3 | 6,6 | 6,5 | Fließt |
| Beispiel 4 (Mahlgut) | 5 | 9 | 8,0 | 8,0 | 8,33 | Fließt leicht stockend Statisch aufgeladen |
| Beispiel 5 (Mahlgut) | 20 | 6,5 | 6,5 | 6,2 | 6,4 | Fließt |
| Beispiel 6 (Granulat) | 10 | 2,0 | 2,0 | 2,0 | 2,0 | Fließt |
| Beispiel 7 (Granulat) | 15 | 1,8 | 2,0 | 2,0 | 2,0 | Fließt |

## Patentansprüche

1. Zusammensetzung, enthaltend Harnstoff, mindestens einen wirksamen Bestandteil sowie mindestens ein Verdickungsmittel, das aus Kohlenhydraten ausgewählt ist, erhältlich durch Dispergieren mindestens eines genannten wirksamen Bestandteils in einer Schmelze des Harnstoffes in Gegenwart des genannten Verdickungsmittels.

2. Zusammensetzung nach Anspruch 1, **dadurch gekennzeichnet, dass** der wirksame Bestandteil ausgewählt wird aus der Gruppe, die besteht aus Entschäumern, Entschäumerformulierungen und Oberflächenbehandlungsmitteln.

3. Zusammensetzung nach Anspruch 1 oder 2, **dadurch gekennzeichnet, dass** der wirksame Bestandteil ausgewählt wird, aus der Gruppe, die besteht aus Faserbehandlungsmittel, Reinigungsmittelzusätzen, Kosmetikzusätzen und Papierherstellungszusätzen.

4. Zusammensetzung nach irgend einem der Ansprüche 1 bis 3, **dadurch gekennzeichnet, dass** das Gewichtsverhältnis von Harnstoff zu dem wirksamen Bestandteil von 60 : 40 bis 99,9 : 0,1 beträgt.

5. Zusammensetzung nach irgend einem der Ansprüche 1 bis 4, **dadurch gekennzeichnet, dass** das Gewichtsverhältnis von Harnstoff und Verdickungsmittel zu dem aktiven Bestandteil 70 : 30 bis 99,9 : 0,1 beträgt.

6. Zusammensetzung nach Anspruch 5, **dadurch gekennzeichnet, dass** die Menge des Verdickungsmittels bezogen auf die Menge des Harnstoffes maximal 10 Gew.-% beträgt.

7. Verfahren zur Herstellung einer Zusammensetzung nach irgend einem der Ansprüche 1 bis 6, dass die Schritte umfaßt:
a) Schmelzen von Harnstoff,
b) Dispergieren mindestens eines wirksamen Bestandteils in Gegenwart mindestens eines Verdickungsmittels, das aus Kohlenhydraten ausgewählt ist, in der Harnstoffschmelze,
c) Abkühlen lassen der Dispersion unter Verfestigung.

8. Verfahren nach Anspruch 7, dass die Sprühgranulation der in Schritt b) erhaltenen Harnstoffschmelze umfasst.

9. Verwendung der Zusammensetzung nach irgendeinem der Ansprüche 1 bis 6 als Reinigungsmittelzusatz, Kosmetikzusatz, Textilausrüstungszusatz, als Zusatz bei der Papierherstellung, bei der Abwasserbehandlung oder bei Färbeprozessen.

10. Verwendung von Kohlenhydraten zur Verdickung von Harnstoffschmelzen.

## Claims

1. Composition comprising urea, at least one active constituent and also at least one thickening agent selected from carbohydrates, obtainable by dispersing at least one specified active constituent in a melt of the urea in the presence of the thickening agent specified.

2. Composition according to Claim 1, **characterized in that** the active constituent is selected from the group consisting of defoamers, defoamer formulations and surface-treating agents.

3. Composition according to Claim 1 or 2, **characterized in that** the active constituent is selected from the group consisting of fibre-treating agents, cleaning-agent additives, cosmetic additives and papermaking additives.

4. Composition according to any one of the Claims 1 to 3, **characterized in that** the weight ratio of urea to the active constituent is in the range from 60:40 to 99.9:0.1.

5. Composition according to any one of the Claims 1 to 4, **characterized in that** the weight ratio of urea and thickening agent to the active constituent is in the range from 70:30 to 99.9:0.1.

6. Composition according to Claim 5, **characterized in that** the amount of thickening agent is not more than 10% by weight, based on the amount of urea.

7. Process for producing a composition according to any one of the Claims 1 to 6, comprising the steps of
a) melting urea,
b) dispersing in the urea melt at least one active constituent in the presence of at least one thickening agent selected from carbohydrates,
c) allowing the dispersion to cool and solidify.

8. Process according to Claim 7, comprising spray-granulating the urea melt obtained in step b).

9. Use of the composition according to any one of the Claims 1 to 6 as cleaning-agent additive, cosmetic additive, textile-finishing additive, as additive in papermaking, in wastewater treatment or in dyeing operations.

10. Use of carbohydrates for thickening urea melts.

## Revendications

1. Composition contenant de l'urée, au moins un constituant efficace ainsi qu'au moins un épaississant qui est choisi parmi les glucides, pouvant être obtenue par dispersion d'au moins un constituant efficace cité dans une masse fondue de l'urée en présence de l'épaississant cité.

2. Composition selon la revendication 1, **caractérisée en ce que** le constituant efficace est choisi dans le groupe qui consiste en les antimousses, les formulations d'antimousses et les agents de traitement de surface.

3. Composition selon la revendication 1 ou 2, **caractérisée en ce que** le constituant efficace est choisi dans le groupe qui consiste en les agents de traitement des fibres, les additifs d'agents de nettoyage, les additifs de cosmétiques et les additifs de fabrication du papier.

4. Composition selon l'une quelconque des revendications 1 à 3, **caractérisée en ce que** le rapport massique de l'urée au constituant efficace est 60:40 à 99,9:0,1.

5. Composition selon l'une quelconque des revendications 1 à 4, **caractérisée en ce que** le rapport massique de l'urée et de l'épaississant au constituant actif est 70:30 à 99,9:0,1.

6. Composition selon la revendication 5, **caractérisée en ce que** la quantité d'épaississant par rapport à la quantité d'urée est au maximum 10 % en masse.

7. Procédé pour produire une composition selon l'une quelconque des revendications 1 à 6 qui comprend les étapes :
a) faire fondre de l'urée,
b) disperser au moins un constituant efficace en présence d'au moins un épaississant, qui est choisi parmi les glucides, dans la masse fondue d'urée,
c) laisser refroidir la dispersion avec solidification.

8. Procédé selon la revendication 7, qui comprend la granulation par pulvérisation de la masse fondue d'urée obtenue dans l'étape b).

9. Utilisation de la composition selon l'une quelconque des revendications 1 à 6 comme additif d'agent de nettoyage, additif de cosmétique, additif d'apprêt de textiles, comme additif dans la fabrication du papier, dans le traitement des eaux usées ou dans les processus de coloration.

10. Utilisation de glucides pour l'épaississement de masses fondues d'urée.
